# EUROPÄISCHE PATENTSCHRIFT

(11) **EP 2 655 125 B1**
(45) Veröffentlichungstag und Bekanntmachung des Hinweises auf die Patenterteilung: **16.03.2016**
(21) Anmeldenummer: 11788067.4
(22) Anmeldetag: 25.11.2011
(51) Int. Cl.: B60N 2/07, B60N 2/12

(54) **LÄNGSEINSTELLBARER FAHRZEUGSITZ**
LONGITUDINALLY ADJUSTABLE VEHICLE SEAT
SIÈGE DE CONDUCTEUR RÉGLABLE LONGITUDINALEMENT

(30) Priorität: 20.12.2010 DE 102010055244
(43) Veröffentlichungstag der Anmeldung: 30.10.2013
(73) Patentinhaber: Johnson Controls Components GmbH & Co. KG, 67657 Kaiserslautern (DE)
(72) Erfinder: TEUFEL, Ingo, 67806 Rockenhausen (DE); SCHUMANN, Kai, 66509 Rieschweiler (DE)
(74) Vertreter: Wilhelm, Wolfgang
(86) Internationale Anmeldenummer: PCT/EP2011/005931
(87) Internationale Veröffentlichungsnummer: WO 2012/084116

(56) Entgegenhaltungen:
- DE-A1-102004 015 450

## Beschreibung

Die Erfindung betrifft einen längseinstellbaren Fahrzeugsitz mit den Merkmalen des Oberbegriffs des Anspruches 1.

Aus der DE 10 2008 056 969 B3 ist ein Längseinsteller für einen Fahrzeugsitz mit den Merkmalen des Oberbegriffs des Anspruchs 1 bekannt. Hierbei definieren bei einem Schienenpaar für einen längseinstellbaren Fahrzeugsitz mit einer strukturfesten ersten Schiene, einer in dieser ersten Schiene geführten, mit dem Fahrzeugsitz verbundenen zweiten Schiene, einem ersten Endanschlag, einem zweiten Endanschlag, und einer lösbaren Verriegelungsvorrichtung zum lösbaren Verriegeln der Position der ersten Schiene gegenüber der zweiten Schiene, eine mit dem ersten Endanschlag zusammenwirkende erste Anschlagsfläche und eine mit dem zweiten Endanschlag zusammenwirkende zweite Anschlagsfläche einen Verfahrweg der zweiten Schiene relativ zur ersten Schiene. Ferner ist ein über eine Betätigungsvorrichtung betätigbarer dritter Endanschlag vorgesehen, welcher in Zusammenwirken mit der ersten Anschlagsfläche eine dritte Endstellung definiert, und diese dritte Endstellung der zweiten Schiene relativ zur ersten Schiene ist zwischen besagter erster Endstellung und besagter zweiter Endstellung angeordnet. Bei diesem dritten, wegschaltbaren Endanschlag handelt es sich bevorzugt um den hinteren Endanschlag für die normale Benutzung, so dass der Verfahrweg bei Bedarf nach hinten vergrößert werden kann.

Beispielsweise aus der DE 43 04 456 A1 ist eine feste Anordnung eines Endanschlags an der mit dem Fahrzeugsitz verbundenen, längsverschiebbaren Schiene bekannt, der mit einem Gegenanschlag zusammenwirkt, um eine Endstellung der Schiene zu definieren.

Der Erfindung liegt die Aufgabe zu Grunde, einen längseinstellbaren Fahrzeugsitz der eingangs genannten Art zu verbessern. Insbesondere soll der Komfort für den Nutzer des Fahrzeugsitzes erhöht und für Fahrzeugsitze der dahinterliegenden Reihen das Ein- und Aussteigen erleichtert werden. Diese Aufgabe wird erfindungsgemäß durch einen Fahrzeugsitz mit den Merkmalen des Anspruches 1 gelöst. Vorteilhafte Ausgestaltungen sind Gegenstand der Unteransprüche.

Erfindungsgemäß ist bei einem gattungsgemäßen längseinstellbaren Fahrzeugsitz die aus dem Verfahrweg der Schienen heraus bewegliche Anschlagsfläche an der sitzfesten zweiten Schiene angeordnet, wobei der wegschaltbare Endanschlag, an welchem die bewegliche Anschlagsfläche ausgebildet ist, gemeinsam mit der Verriegelungsvorrichtung für ein Einnehmen einer Easy-Entry-Stellung betätigbar ist.

Durch das Vorsehen der wegschaltbaren Anschlagsfläche an der sitzfesten Schiene ist eine direkte Ansteuerung über die Easy-Entry-Funktion möglich, insbesondere bevorzugt über einen Bowdenzug, welcher mit einem Teil der Lehne verbunden und durch die Vorschwenkbewegung der Lehne betätigbar ist. Durch die Anordnung der wegschaltbaren Anschlagsfläche an der sitzfesten Schiene sind zudem weniger Bauteile erforderlich, die geschützt im Inneren des Schienenbauraums anordenbar sind.

Bevorzugt ist der maximale Verstellbereich nach vorn und nach hinten jeweils durch einen stationären Endanschlag begrenzt, wobei der Komfortverstellbereich ein Teilbereich des maximalen Verstellbereichs ist.

Vorzugsweise weist der wegschaltbare Endanschlag besagte bewegliche Anschlagsfläche auf, welche an der sitzfesten zweiten Schiene angeordnet ist, und die beiden anderen Endanschläge weisen stationäre Anschlagsflächen an der sitzfesten zweiten Schiene auf, wobei die bewegliche Anschlagsfläche des wegschaltbaren Endanschlags zwischen den beiden stationären Anschlagsflächen der beiden anderen Endanschläge angeordnet ist. Hierbei sind bevorzugt die zugeordneten Anschlagsflächen der Endanschläge an der strukturfesten ersten Schiene derart angeordnet, dass die der beweglichen Anschlagsfläche zugeordnete Anschlagsfläche des wegschaltbaren Endanschlags an einem Schienenende der strukturfesten ersten Schiene angeordnet ist.

Insbesondere bevorzugt ist der wegschaltbare Endanschlag in mindestens einem in der ersten Schiene ausgebildeten Schlitz geführt. Im Prinzip reicht, wenn ein Verdrehen des wegschaltbaren Endanschlags sicher verhindert werden kann, eine Führung in einem der beiden Schenkel der Schiene aus, bevorzugt ist jedoch ein zur Mittellängsebene der Schiene spiegelbildlicher Aufbau vorgesehen.

Ein derartiger Fahrzeugsitz kann beispielsweise bei einem Personenkraftfahrzeug oder einem Nutzfahrzeug verwendet werden, wobei es sich nicht notwendigerweise um den Fahrersitz handeln muss. Ein derartiger Fahrzeugsitz ist vorzugsweise in einer vorderen Sitzreihe vorgesehen, er kann aber auch in einer mittleren oder hinteren Sitzreihe vorgesehen sein, beispielsweise auch bei einen Van.

Im folgenden ist die Erfindung anhand von Ausführungsbeispielen, teilweise unter Bezugnahme auf die Zeichnung, näher erläutert. Es zeigen:

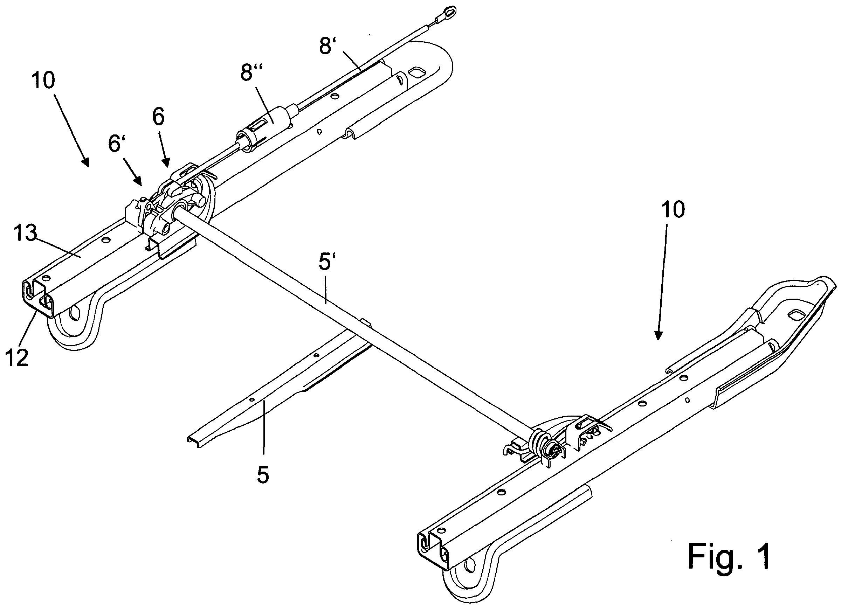

- Fig. 1: eine perspektivische Ansicht zweier Schienenpaare für einen längseinstellbaren Fahrzeugsitz gemäß dem ersten Ausführungsbeispiel,
- Fig. 2a-d: einen Schnitt mittig längs eines Schienenpaares von Fig. 1 in verschiedenen Stellungen,
- Fig. 3a-d: geschnittene, leicht perspektivische Ansichten der Schienenpaare von Fig. 2a-d in den entsprechenden Stellungen und von der anderen Seite gesehen,
- Fig. 4a-d: Detailansichten der Schienenpaare von Fig. 3a-d in den entsprechenden Stellungen,

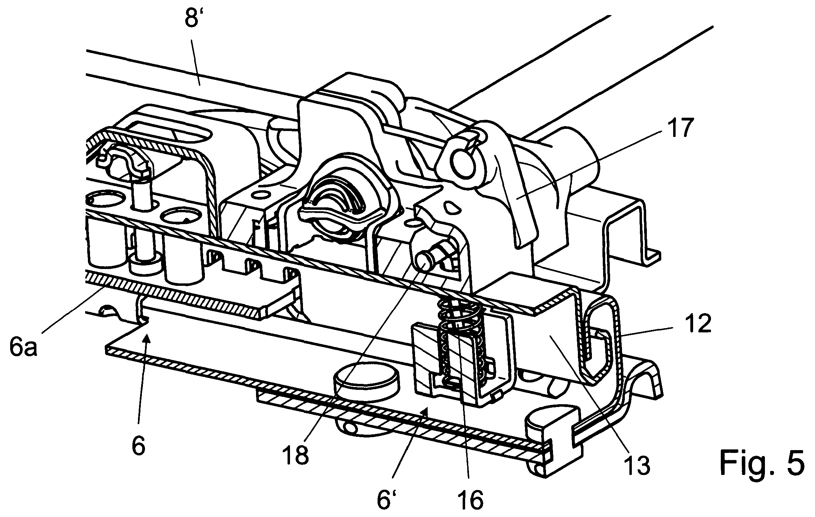

- Fig. 5: eine Fig. 4a entsprechende perspektivische Detaildarstellung mit anderer Schnittführung,

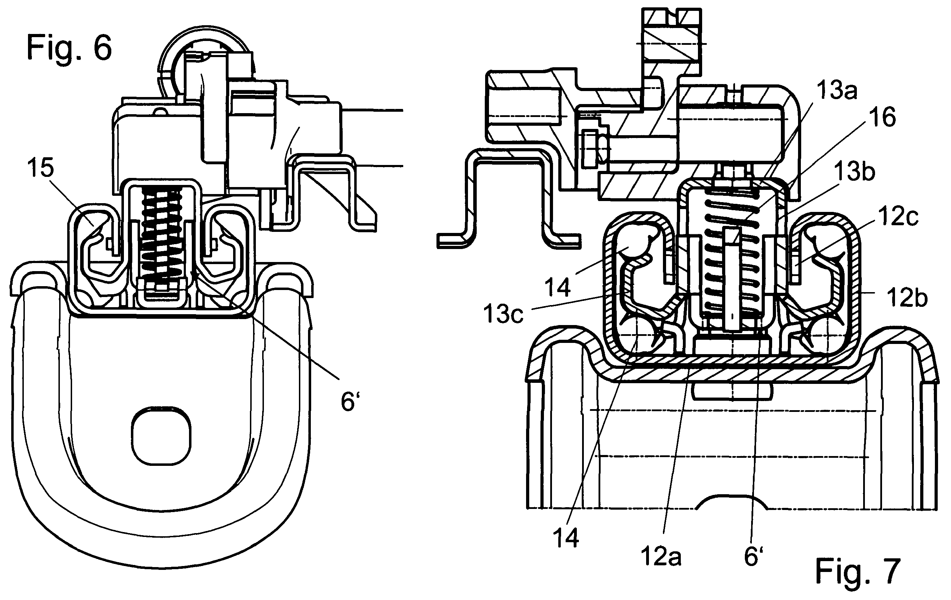

- Fig. 6: eine Ansicht von vorn,
- Fig. 7: eine geschnittene Ansicht von hinten,
- Fig. 8: eine perspektivische, geschnittene Ansicht eines Schienenpaares gemäß einem zweiten Ausführungsbeispiel,
- Fig. 9: eine Detailansicht von Fig. 8,
- Fig. 10: eine schematische Seitenansicht eines Fahrzeugsitzes mit zwei Schienenpaaren und
- Fig. 11: eine perspektivische, geschnittene Ansicht eines Schienenpaares gemäß einem dritten Ausführungsbeispiel.

Ein längseinstellbarer Fahrzeugsitz 1, vorliegend für ein dreitüriges Kraftfahrzeug, weist eine Sitzfläche 2, eine über einen Beschlag auf bekannte Weise neigungseinstellbar mit der Sitzfläche verbundene Rückenlehne 3, und ein unterhalb der Sitzfläche 2 angeordnetes Scherengestell 4 zur Neigungs- und Höheneinstellbarkeit der Sitzfläche 2 auf, wobei die Neigungs- und Höheneinstellbarkeit der Sitzfläche 2 alternativ auch entfallen kann.

Die Anordnung des Fahrzeugsitzes innerhalb des Fahrzeugs und dessen gewöhnliche Fahrtrichtung definieren die im folgenden verwendeten Richtungsangaben. Dabei wird eine senkrecht zum Erdboden orientierte Richtung im folgenden als Vertikalrichtung bezeichnet und eine Richtung senkrecht zur Vertikalrichtung und senkrecht zur Fahrtrichtung wird im folgenden als Querrichtung bezeichnet.

Der Fahrzeugsitz 1 ist über zwei Schienenpaare 10 mit der Fahrzeugstruktur 11 verbunden, wobei die beiden Sitzschienenpaare 10 jeweils einander entsprechend ausgebildet sind, so dass im Folgenden nur ein Schienenpaar 10 näher beschrieben wird. Der Fahrzeugsitz 1 weist einen Längseinsteller mit einem Bügel 5 als Bedienelement für den Längseinsteller auf, wobei über den Bügel 5 eine das Schienenpaar 10 verriegelnde Verriegelungsvorrichtung 6 entriegelbar ist, so dass der Fahrzeugsitz 1 innerhalb eines Komfortverstellbereichs längseinstellbar ist. Zum Bedienen der Verriegelungsvorrichtung 6 ist besagter Bügel 5 unten am Fahrzeugsitz 1 vorgesehen. Das über den Bügel 5 eingeleitete Drehmoment wird über eine Querstange 5' auf die an beiden Schienenpaaren 10 vorgesehenen Verriegelungsvorrichtungen 6 gleichzeitig übertragen.

Ferner weist der Fahrzeugsitz 1 eine Easy-Entry-Funktion auf. Zum Erleichtern des Einsteigens kann mittels Betätigung eines an der Lehnenseite angeordneten Griffs 8 die Rückenlehne 3 entriegelt und nach vorn geschwenkt werden, wobei vorliegend zeitlich etwas versetzt bezüglich des Vorschwenkens der Rückenlehne 3 auch die Verriegelungsvorrichtung 6 entriegelt wird, so dass der Fahrzeugsitz 1 nach vorn verschiebbar ist, vorliegend über den Komfortverstellbereich hinaus. Hierbei wird, ausgelöst durch eine Betätigung des Griffs 8 und das damit verbundene Vorschwenken der Rückenlehne 3 ein nicht näher dargestellter Bowdenzug betätigt, welcher die Beschläge des Fahrzeugsitzes 1 entriegelt.

Durch die Schwenkbewegung der Rückenlehne 3 wird ein Bowdenzug 8' betätigt, welcher auf einer Sitzseite, vorliegend auf der in Fahrtrichtung rechten Sitzseite, vorgesehen ist. Der Bowdenzug 8', welcher einen auf bekannte Weise ausgebildeten Überhubschutz 8" aufweist, ist mit der Verriegelungsvorrichtung 6 auf der rechten Sitzseite verbunden, welche beim Vorschwenken der Rückenlehne 3 gelöst wird. Dabei wird die Querstange 5' mit dem Bügel 5 gedreht, wodurch auch die Verriegelungsvorrichtung auf der linken Sitzseite gelöst wird.

Auch eine spiegelbildlichen Ausgestaltung ist denkbar, wobei auf der rechten sowie auf der linken Sitzseite je ein mit einer Verriegelungsvorrichtung 6 verbundener Bowdenzug 8' vorgesehen ist. Durch die Schwenkbewegung der Rückenlehne 3 werden dann beide Bowdenzüge 8' betätigt, welche auf beiden Sitzseiten vorgesehen sind, wodurch beide Verriegelungsvorrichtungen 6 gelöst werden.

Ferner erfolgt über den Bowdenzug 8' eine Betätigung eines wegschaltbaren Endanschlags 6', auf welchen an späterer Stelle näher eingegangen wird, und dessen Betätigung ein Vorfahren des Fahrzeugsitzes 1 über den Komfortverstellbereich hinaus ermöglicht.

Das Sitzschienenpaar 10 weist eine, vorliegend unter Zwischenlage zweier Adapter, mit der Fahrzeugstruktur 11 fest verbundene, unten angeordnete, erste Schiene 12 und eine mit dem Sitzunterbau, also vorliegend dem Scherengestell 4, verbundene zweite Schiene 13 auf. Hierbei ist die erste Schiene 12 mit einem an der Fahrzeugstruktur 11 anliegenden Boden 12a, in welchem Durchbrüche zur Anbindung vorgesehen sind, und zwei nach oben umgebogenen Seiten 12b ausgebildet, welche um 180°nach innen umgebogene Randbereiche 12c aufweist. Die zweite Schiene 13 ist innerhalb der ersten Schiene 12 angeordnet, wobei sie einen oben angeordneten ebenen Bereich 13a zur Anbindung an das Scherengestell 4, zwei nach unten gebogene Seiten 13b und nach außen umgebogene Randbereiche 13c aufweist, welche zwischen den Seiten 12b und den Randbereichen 12c der ersten Schiene 12 angeordnet sind, so dass die erste Schiene 12 die zweite Schiene 13 umgreift. Um die Reibung zwischen den beiden Schienen 12 und 13 gering zu halten, sind mehrere Kugeln 14 oberhalb und unterhalb auf beiden Seiten der nach außen umgebogenen Randbereiche, d.h. jeweils im seitlichen Bereich des Schienenzwischenraums, unter Einlage von Kugelhaltern 15 angeordnet.

Die zweite Schiene 13 ist für die normale Benutzung des Fahrzeugsitzes 1 zwischen durch Endanschläge bestimmten Endpositionen innerhalb eines Komfortverstellbereichs verschiebbar und kann mit Hilfe besagter Verriegelungsvorrichtung 6, wie sie vorn Prinzip her in der DE 10 2008 056 683 A1 gezeigt ist, oder alternativ beispielsweise einer Verriegelungsvorrichtung wie sie in der EP 1 389 557 B1 gezeigt ist, an verschiedenen Sitzlängspositionen des Fahrzeugsitzes 1 lösbar verriegelt werden.

In Richtung nach hinten, bezogen auf die normale Einbaurichtung des Fahrzeugsitzes 1 und Fahrtrichtung des Fahrzeugs, wird der hintere Endanschlag durch eine Anschlagsfläche 12' an einem ersten Vorsprung am Boden 12a der fahrzeugstrukturfesten ersten Schiene 12 und eine Anschlagsfläche 13' an einem ersten Vorsprung an der sitzfesten zweiten Schiene 13 gebildet. Der erste Vorsprung der sitzfesten zweiten Schiene 13 ist hierbei im vorderen Bereich der zweiten Schiene 13 angeordnet, wie auch der erste Vorsprung der fahrzeugstrukturfesten ersten Schiene 12.

Der vordere Endanschlag zur Begrenzung des Komfortverstellbereichs nach vorn wird durch eine Anschlagsfläche 12" an zweitem Vorsprung am Boden 12a der fahrzeugstrukturfesten ersten Schiene 12 und eine Anschlagsfläche 13" an besagtem wegschaltbaren Endanschlag 6' gebildet, welcher in einer Richtung senkrecht zum ebenen Bereich 13a der zweiten Schiene 13 beweglich ist, vorliegend nach oben hochziehbar ist.

Der vordere Endanschlag zur Begrenzung des maximalen Verfahrbereichs nach vorn, vorliegend zur Begrenzung des maximalen Verfahrens des Fahrzeugsitzes 1 zum Einnehmen der Easy-Entry-Stellung, wird vorliegend durch eine Anschlagsfläche 12'" an einem dritten Vorsprung am Boden 12a der fahrzeugstrukturfesten ersten Schiene 12 und eine Anschlagsfläche 13"' an einem dritten Vorsprung an der sitzfesten zweiten Schiene 13 gebildet. Hierbei ist der dritte Vorsprung am Boden 12a der fahrzeugstrukturfesten ersten Schiene 12 etwa in Schienenmitte und der dritte Vorsprung der sitzfesten zweiten Schiene 13 am hinteren Ende der zweiten Schiene 13 angeordnet.

Die Anschlagsflächen 12' und 12'" sind vorliegend durch hochgestellte Laschen gebildet, also einstückig mit der ersten Schiene 12 verbunden. Die Anschlagsfläche 12" ist hingegen durch ein getrennt ausgebildetes Teil gebildet, welches fest an der ersten Schiene 12 angebracht ist. Durch die nachträgliche Anbringung kann der Komfortverstellbereich an unterschiedliche Fahrzeugtypen angepasst werden, ohne dass verschiedene Schienentypen für den gleichen maximalen Verstellbereich erforderlich sind. Natürlich können beispielsweise auch alle Anschlagsflächen 12', 12", 12"' durch getrennt ausgebildete Teile gebildet sein oder einstückig mit der ersten Schiene 12 ausgebildet sein.

Der wegschaltbare Endanschlag 6' ist im Wesentlichen innerhalb des durch die beiden Schienen 12, 13 gebildeten Hohlraums angeordnet, wobei er eine senkrecht zum ebenen Bereich 13a der zweiten Schiene 13 bewegliches Kraftübertragungselement aufweist, welches vorliegend durch ein Zugelement 16 gebildet ist, das mittels einer auf dem Zugelement 16 mehr oder weniger konzentrisch zur Mittelachse des Zugelements 16 angeordneten, zylinderförmig gewickelten Feder nach unten vorgespannt wird. Ein U-förmiger Bereich des wegschaltbaren Endanschlags 6', dessen eine Seite die Anschlagsfläche 13" bildet, umgreift den unteren Teil des Zugelements 16 und der Feder und begrenzt die Kompression der Feder, also den Bewegungsweg des Zugelements 16 nach oben, d.h. in Richtung des ebenen Bereichs 13a. Das obere Ende des Zugelements 16 ist vorliegend hakenförmig ausgebildet und in einen Steuerbolzen 18 eingehängt.

Ferner bildet der U-förmige Bereich des wegschaltbaren Endanschlags 6' eine Führung, wobei auf beiden Seiten jeweils ein mittlerer Bereich des U-förmigen Bereichs nach außen gebogen ist, wodurch ein Führungsvorsprung gebildet wird, und in einen senkrecht zum ebenen Bereich 13a der zweiten Schiene 13 verlaufenden Schlitz ragt. Über diese Führung erfolgt auch die Krafteinleitung in die Schiene im Anschlagsfall, d.h. der Rest der Mechanik wird durch die Querkraft bei einem Auftreffen der Anschlagsflächen 12" und 13" nicht belastet.

Die Montage des wegschaltbaren Endanschlags 6' kann eine elastische Verformung des U-förmigen Bereichs oder alternativ der Schenkel der zweiten Schiene 13 umfassen, so dass der Führungsvorsprung in den Schlitz unter Vorsehen der Verschiebbarkeit in Längsrichtung des Schlitzes eingeclipst und im Schlitz gesichert ist.

Der Schlitz kann jedoch alternativ auch nach unten hin offen ausgebildet sein, so dass die Bewegung nach unten durch die Anlage an der ersten Schiene 12 oder ggf. durch eine entsprechende Ausgestaltung des Zugelements 16 begrenzt wird.

Das Ende der Seele des Bowdenzugs 8' ist vorliegend an einem drehbar gelagerten Hebel 17 angebracht, welcher mit dem Steuerbolzen 18 verbunden ist. Ein Ziehen am Bowdenzug 8' bewirkt daher eine Drehbewegung des drehbar gelagerten Hebels 17, wodurch auch der Steuerbolzen 18 bewegt wird, wobei die Hauptkomponente von dessen Bewegungsrichtung nach oben gerichtet ist. Durch die Bewegung des Steuerbolzens 18 wird das Zugelement 16 samt U-förmigem Bereich entgegen der Federkraft angehoben, so dass die Anschlagsfläche 13" nach oben bewegt und damit der zusätzliche Verschiebbereich freigegeben wird.

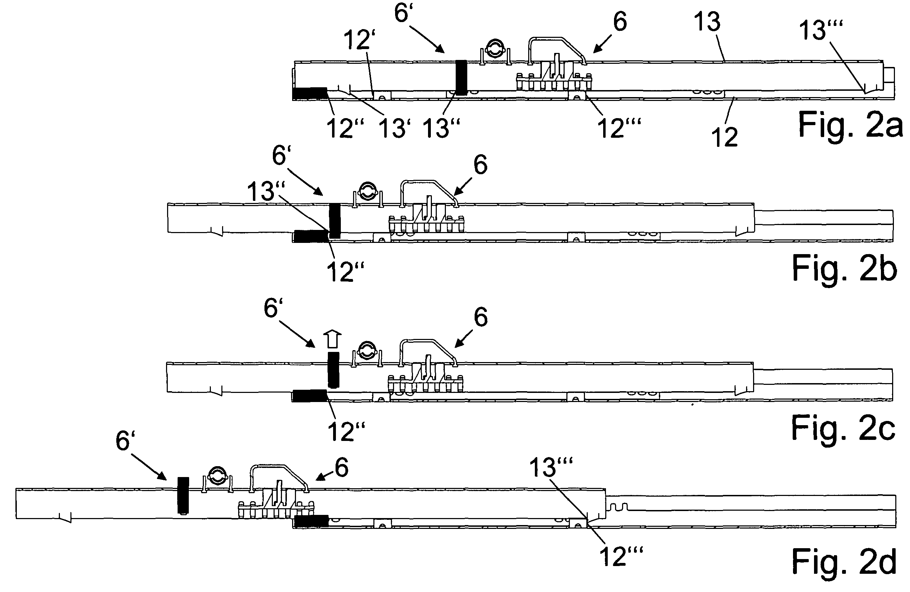

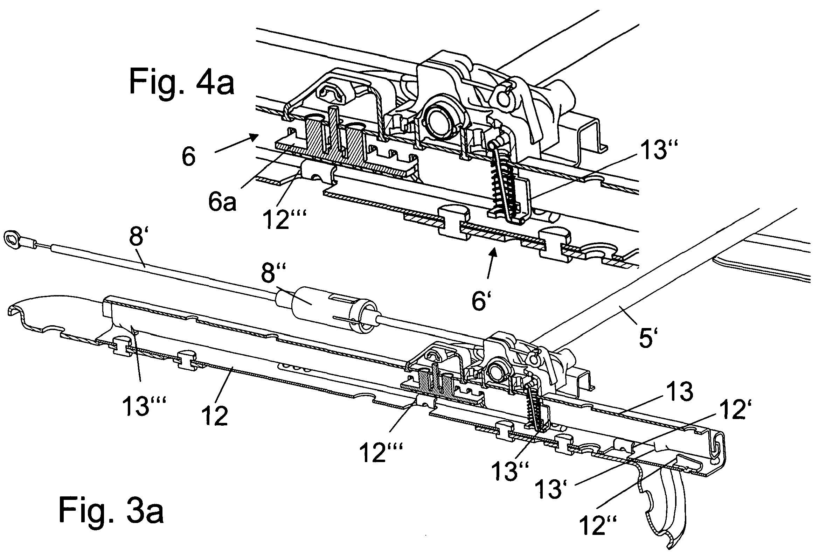

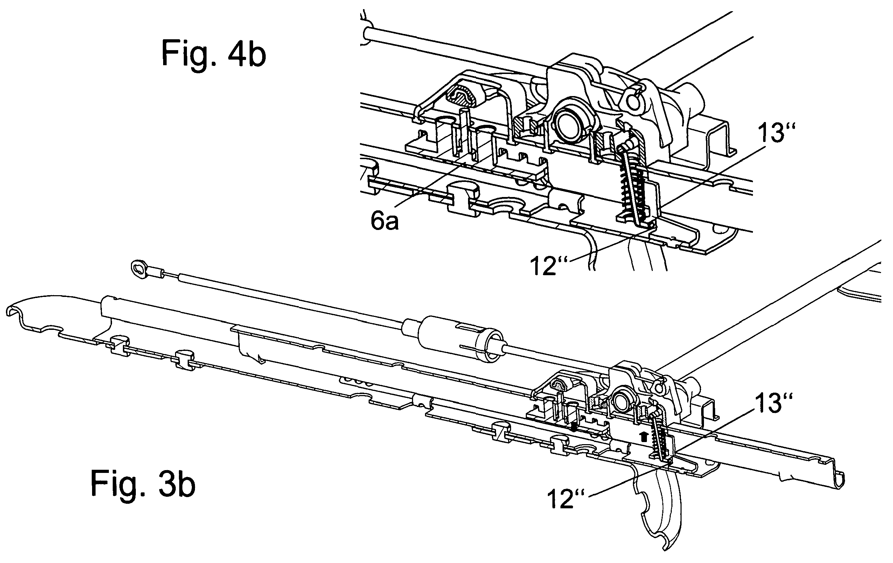

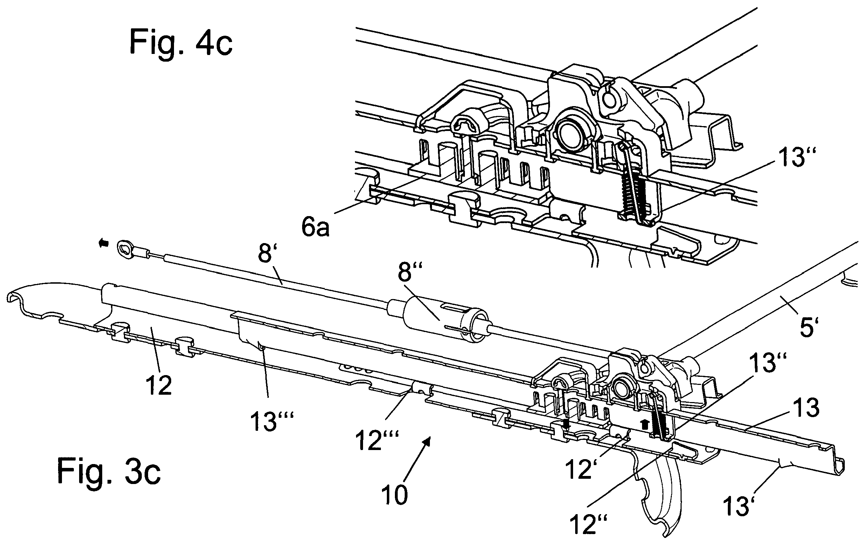

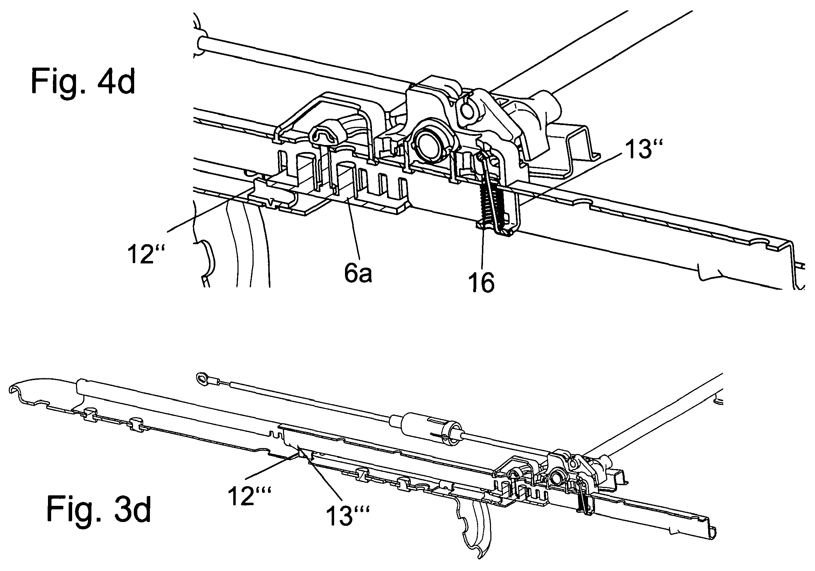

Im Folgenden wird die Funktion des Längseinstellers unter Bezugnahme auf die Figuren 2a-d, 3a-d und 4a-d näher erläutert.

Bei normaler Nutzung durch einen Insassen kann der Fahrzeugsitz 1 mittels Betätigung des Bügels 5 und des durch ein Anheben des Bügels 5 verbundenen Lösens der Verriegelungsvorrichtung 6, d.h. einem Absenken einer Platte 6a mit seitlich vorstehenden Zähnen, so dass die Zähne sich nach unten bewegen und aus den Rastöffnungen in der ersten Schiene 12 gelangen, innerhalb des normalen Benutzungs- oder Komfortverstellbereichs verschoben und in der gewünschten Position wieder verriegelt werden. Der Komfortverstellbereich ist nach hinten durch ein Aufeinandertreffen der Anschlagsflächen 12' und 13' begrenzt, welche im vorderen Bereich der Schienen 12 und 13 angeordnet sind. Eine relativ weit hinten angeordnete Stellung des Fahrzeugsitzes 1 ist in Fig. 2a, 3a und 4a dargestellt. Die (nahezu) vorderste Stellung des Fahrzeugsitzes 1 innerhalb des Komfortverstellbereichs ist in Fig. 2b dargestellt, wobei die Anschlagsflächen 12" und 13" beinahe aneinander anliegen.

Erfolgt, ausgehend von dieser Stellung eine Betätigung des Griffs 8 zum Entriegeln der Beschläge der Rückenlehne 3 und ein Vorschwenken der Rückenlehne 3, so wird der Bowdenzug 8' betätigt, wodurch zum einen die Verriegelungsvorrichtung 6 betätigt wird und die Zähne durch Absenken der Rastplatte aus den Rastöffnungen bewegt werden, und zum anderen der wegschaltbare Endanschlag 6', wie vorstehend beschrieben, hochgezogen wird, so dass die Anschlagsfläche 13" angehoben wird und bei einem Vorfahren des Fahrzeugsitzes 1 nicht mehr in Kontakt mit der Anschlagsfläche 12" gelangen kann, wie in den Figuren 2c, 3c und 4c dargestellt, und der Fahrzeugsitz 1 nach vorn verfahren werden kann, bis die Anschlagsflächen 12"' und 13"', welche den vorderen Endanschlag bilden, in Kontakt miteinander gelangen und die Vorfahrbewegung des Fahrzeugsitzes 1 stoppen, wie in den Figuren 2d, 3d und 4d dargestellt.

Obwohl vorstehend die Verriegelungsvorrichtung 6 der Einfachheit halber mit einer einzigen durchgehenden Platte 6a mit seitlich vorstehenden Zähnen dargestellt ist, kann die Verriegelungsvorrichtung auch derart ausgebildet sein, dass mehrere Platten vorgesehen sind, so dass - je nach Stellung - beispielsweise nur eine der Platten verriegelt, während die anderen Platten aufgrund der Position nicht eingreifen können.

Alternativ zum vorstehend beschriebenen wegschaltbaren Endanschlag 6', welcher senkrecht zum ebenen Bereich 13a der zweiten Schiene 13 beweglich ist, kann der wegschaltbare Endanschlag 6' im Prinzip auch auf andere Weise beweglich sein, beispielsweise verschwenkbar oder seitlich verschiebbar ausgebildet sein, so dass bei einem Wegschalten des wegschaltbaren Endanschlags 6' die Anschlagsfläche 13" der Anschlagsfläche 12" ausweichen kann.

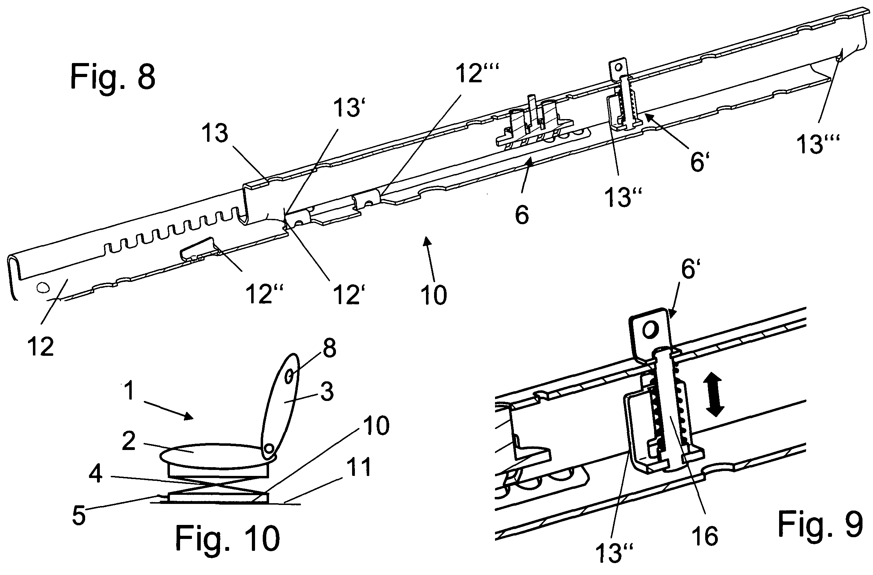

In den Figuren 8 und 9 ist ein Längseinsteller für einen Fahrzeugsitz gemäß einem zweiten Ausführungsbeispiel dargestellt, welcher einen in Hinblick auf die Ausgestaltung des Zugelements 16 abgewandelten wegschaltbaren Endanschlag 6' neben der Schienenverriegelung 6 des ersten Ausführungsbeispiels aufweist. Der wegschaltbare Endanschlag 6' weist hierbei einen Stift auf, welcher als Zugelement 16 dient, an dessen unterem Ende der U-förmige Bereich fest angebracht ist. Entsprechend dem ersten Ausführungsbeispiel sind wiederum die Schenkel des U-förmigen Bereichs mit einem vorstehenden Bereich ausgebildet, welcher in einen senkrecht zum ebenen Bereich 13a der zweiten Schiene 13 verlaufenden Schlitz in jedem der Schenkel der zweiten Schiene 13 positioniert und verschiebbar gelagert ist. Auf dem Stift sitzt wiederum konzentrisch eine Feder, welche sich an einem Absatz am Stift und mit dem anderen Ende am ebenen Bereich 13a abstützt. Der Stift ragt durch eine Öffnung in der zweiten Schiene 13 nach oben und ist mit einem U-förmigen Blech verbunden, an welchem ein Ende des Bowdenzugs (nicht dargestellt) oder alternativ ein schwenkbar hieran gelagerter Hebel, der mit dem Bowdenzug verbunden ist, angreift.

Im Unterschied zum ersten Ausführungsbeispiel ist bei dem zweiten Ausführungsbeispiel ferner die Anschlagsfläche 12" für den wegschaltbaren Endanschlag 6' nicht am Schienenende sondern weiter innenliegend angeordnet.

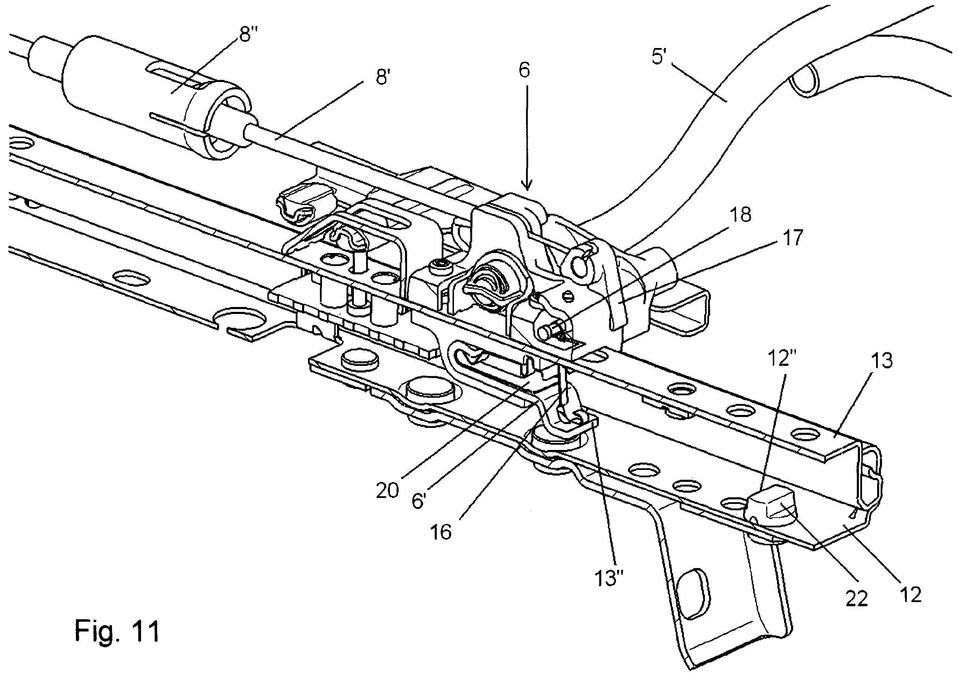

In Fig. 11 ist ein Längseinsteller für einen Fahrzeugsitz gemäß einem dritten Ausführungsbeispiel dargestellt. Der Aufbau und die Funktionsweise des dritten Ausführungsbeispiels gleichen weitgehend dem ersten Ausführungsbeispiel, weshalb im folgenden im wesentlichen lediglich auf die Unterschiede eingegangen wird.

Der wegschaltbare Endanschlag 6' ist um eine Schwenkachse schwenkbar an der zweiten Schiene 13 gelagert. Vorliegend verläuft die Schwenkachse in Querrichtung. Es ist aber auch denkbar, dass die Schwenkachse in Fahrtrichtung oder Vertikalrichtung verläuft. Auch eine andere, schiefe Ausrichtung der Schwenkachse ist denkbar.

Die bewegliche Anschlagsfläche 13" ist in Fahrtrichtung im vorderen Bereich des wegschaltbaren Endanschlags 6' ausgebildet, während sich die Schwenkachse in Fahrtrichtung im hinteren Bereich des wegschaltbaren Endanschlags 6' befindet.

Im in Fahrtrichtung vorderen Bereich des wegschaltbaren Endanschlags 6', nahe der beweglichen Anschlagsfläche 13", ist das Zugelement 16 eingehängt. Ferner ist eine Blattfeder 20 vorgesehen, welche den wegschaltbaren Endanschlag 6' in Vertikalrichtung nach unten vorspannt.

An der ersten Schiene 12 ist ein Nietanschlag 22 angebracht, vorliegend angenietet, an welchem die Anschlagsfläche 12" ausgebildet ist.

Bei Betätigung des Griffs 8 wird der Bowdenzug 8 betätigt, woraufhin das Zugelement 16 den in Fahrtrichtung vorderen Bereich des wegschaltbaren Endanschlags 6' anhebt und somit den wegschaltbaren Endanschlag 6' um die Schwenkachse schwenkt. Dadurch wird die bewegliche Anschlagsfläche 13" in Vertikalrichtung so weit nach oben gezogen, dass ein Kontakt mit der Anschlagsfläche 12" vermieden ist.

Sobald die Ansteuerung der Verriegelungsvorrichtung 6 durch den Bowdenzug 8 aufhört, schwenkt die Blattfeder 20 den wegschaltbaren Endanschlag 6' um die Schwenkachse zurück, wobei der in Fahrtrichtung vorderen Bereich des wegschaltbaren Endanschlags 6' mit der beweglichen Anschlagsfläche 13" wieder abgesenkt wird.

Je nach Ausgestaltung der Verriegelungsvorrichtung 6 kann dieser Absenkvorgang in der Easy-Entry-Stellung stattfinden, also während sich der wegschaltbaren Endanschlag 6' in Fahrtrichtung vor dem Nietanschlag 22 befindet. Beim Zurückschieben des Fahrzeugsitzes in den Komfortverstellbereich gleitet in diesem Fall der wegschaltbare Endanschlag 6' mit einer Schräge über den Nietanschlag 22 und wird dadurch, ähnlich wie beim Anheben durch das Zugelement 16, derart um die Schwenkachse verschwenkt, dass der vordere Bereich mit der beweglichen Anschlagsfläche 13" angehoben wird. Nach vollständigem Überfahren des Nietanschlags 22 schwenkt die Blattfeder 20 den wegschaltbaren Endanschlag 6' wieder zurück.

Vorliegend ist der wegschaltbare Endanschlag 6' einstückig als Metallteil ausgebildet, wobei die in Fahrtrichtung vordere Stirnseite des wegschaltbaren Endanschlags 6' die bewegliche Anschlagsfläche 13" darstellt.

Alternativ ist der wegschaltbare Endanschlag 6' auch mehrteilig ausbildbar. Beispielsweise ist denkbar, den wegschaltbaren Endanschlag 6' zweiteilig auszubilden, wobei der wegschaltbare Endanschlag 6' ein Metallteil und ein Kunststoffteil umfasst. Vorzugsweise bildet das Metallteil dabei einen Grundkörper, dessen Stirnseite die bewegliche Anschlagsfläche 13" des wegschaltbaren Endanschlags 6' darstellt, und an welchem die Blattfeder 20 angreift. Das Kunststoffteil ist dabei im in Fahrtrichtung vorderen Bereich auf den Grundkörper aufgesetzt, wobei an dem Kunststoffteil die erwähnte Schräge ausgebildet ist, und wobei das Zugelement 16 an dem Kunststoffteil angreift.

Gemäß einem weiteren, nicht in der Zeichnung dargestellten Ausführungsbeispiel sind die Schienenpaare um 90°gedreht zur Anordnung des ersten Ausführungsbeispiels angeordnet, d.h. die erste Schiene ist beispielsweise an einer vertikal verlaufenden Wand der Fahrzeugstruktur angebracht, während die zweite Schiene von innen (oder ggf. auch außen) her am Scherengestell (oder ggf. auch einem anderen Sitzunterbau) angebracht ist. Die eigentliche Ausgestaltung und Funktion des wegschaltbaren Endanschlags entspricht jedoch der des ersten Ausführungsbeispiels, so dass hierauf nicht näher eingegangen wird.

Obwohl vorstehend rein mechanisch aktivierte Verriegelungsvorrichtungen und wegschaltbare Endanschläge beschrieben sind, kann die Aktivierung eines Wegschaltens des wegschaltbaren Endanschlags natürlich auch auf andere Weise ausgelöst werden, beispielsweise elektromechanisch. Ferner kann die Bewegung des wegschaltbaren Endschlags beispielsweise auch aufgrund nichtmechanischer Kräfte erfolgen. Beispielsweise kann ein Elektromagnet das Anheben oder ggf. auch das Absenken des wegschaltbaren Endanschlags bewirken.

### Bezugszeichenliste

- 1: Fahrzeugsitz
- 2: Sitzfläche
- 3: Rückenlehne
- 4: Scherengestell
- 5: Bügel (Verriegelungsvorrichtung)
- 5': Querstange
- 6: Verriegelungsvorrichtung
- 6': wegschaltbarer Endanschlag
- 6a: Platte
- 8: Griff
- 8': Bowdenzug
- 8": Überhubschutz
- 10: Schienenpaar
- 11: Fahrzeugstruktur
- 12: erste Schiene
- 12', 12", 12": Anschlagsfläche
- 12a: Boden
- 12b: Seite
- 12c: Randbereich
- 13: zweite Schiene
- 13', 13", 13"': Anschlagsfläche
- 13a: ebener Bereich
- 13b: Seite
- 13c: Randbereich
- 14: Kugel
- 15: Kugelhalter
- 16: Zugelement
- 17: Hebel
- 18: Steuerbolzen
- 20: Blattfeder
- 22: Nietanschlag

## Patentansprüche

1. Längseinstellbarer Fahrzeugsitz (1), aufweisend
mindestens ein Schienenpaar (10), mit einer mit einer Fahrzeugstruktur (11) verbindbaren ersten Schiene (12), einer in dieser ersten Schiene (12) geführten, mit dem Fahrzeugsitz (1) verbundenen zweiten Schiene (13), eine lösbaren Verriegelungsvorrichtung (6) zum lösbaren Verriegeln der Position der ersten Schiene (12) gegenüber der zweiten Schiene (13), einen ersten Endanschlag, einen zweiten Endanschlag und einen dritten Endanschlag, welche die Verfahrbarkeit des Schienenpaares (10) begrenzen,
wobei einer der Endanschläge (6') mittels einer aus dem Verfahrweg der Schienen (12, 13) heraus beweglichen Anschlagsfläche (13") wegschaltbar ausgebildet ist,
**dadurch gekennzeichnet, dass**
die bewegliche Anschlagsfläche (13") an der sitzfesten zweiten Schiene (13) angeordnet ist, und dass der wegschaltbare Endanschlag (6'), an welchem die bewegliche Anschlagsfläche (13") ausgebildet ist, gemeinsam mit der Verriegelungsvorrichtung (6) für ein Einnehmen einer Easy-Entry-Stellung betätigbar ist.

2. Fahrzeugsitz nach Anspruch 1, **dadurch gekennzeichnet, dass** der wegschaltbare Endanschlag (6') ein vorderer Endanschlag ist, welcher einen Komfortverstellbereich nach vorn begrenzt, und dieser Komfortverstellbereich bei Betätigung einer Easy-Entry-Funktion durch Wegbewegen der beweglichen Anschlagsfläche (13") nach vorn erweiterbar ist.

3. Fahrzeugsitz nach Anspruch 1 oder 2, **dadurch gekennzeichnet, dass** der maximale Verstellbereich nach vorn und nach hinten jeweils durch einen stationären Endanschlag begrenzt ist, wobei der Komfortverstellbereich ein Teilbereich des maximalen Verstellbereichs ist.

4. Fahrzeugsitz nach einem der vorhergehenden Ansprüche, **dadurch gekennzeichnet, dass** der wegschaltbare Endanschlag besagte bewegliche Anschlagsfläche (13") aufweist, welche an der sitzfesten zweiten Schiene (13) angeordnet ist, und die beiden anderen Endanschläge stationäre Anschlagsflächen (13', 13"') an der sitzfesten zweiten Schiene (13) aufweisen, wobei die bewegliche Anschlagsfläche (13") des wegschaltbaren Endanschlags zwischen den beiden stationären Anschlagsflächen (13', 13"') der beiden anderen Endanschläge angeordnet ist.

5. Fahrzeugsitz nach einem der vorhergehenden Ansprüche, **dadurch gekennzeichnet, dass** die zugeordneten Anschlagsflächen (12', 12", 12"') der Endanschläge an der ersten Schiene (12) derart angeordnet sind, dass die der beweglichen Anschlagsfläche (13") zugeordnete Anschlagsfläche (12") des wegschaltbaren Endanschlags an einem Schienenende der ersten Schiene (12) angeordnet ist.

6. Fahrzeugsitz nach einem der vorhergehenden Ansprüche, **dadurch gekennzeichnet, dass** die zugeordneten Anschlagsflächen (12', 12", 12"') der Endanschläge an der ersten Schiene (12) derart angeordnet sind, dass die der stationären Anschlagsfläche (13') zugeordnete Anschlagsfläche (12') des den Verstellbereich nach hinten begrenzenden Endanschlags zwischen der der beweglichen Anschlagsfläche (13") zugeordneten Anschlagsfläche (12") und der der stationären Anschlagsfläche (13"') zugeordnete Anschlagsfläche (12"') des den Verstellbereich nach vorn begrenzenden Endanschlags angeordnet ist.

7. Fahrzeugsitz nach einem der vorhergehenden Ansprüche, **dadurch gekennzeichnet, dass** die Verriegelungsvorrichtung (6) mittels zweier getrennt ausgebildeter Betätigungseinrichtungen betätigbar ist, wobei für eine reine Sitzlängseinstellung ausschließlich die Verriegelungsvorrichtung (6) betätigt wird, und für ein Einnehmen der Easy-Entry-Stellung sowohl die Verriegelungsvorrichtung (6) als auch ein wegschaltbarer Endanschlag (6'), an welchem die bewegliche Anschlagsfläche (13") ausgebildet ist, betätigt werden.

8. Fahrzeugsitz nach einem der vorhergehenden Ansprüche, **dadurch gekennzeichnet, dass** die Betätigungsvorrichtung für die bewegliche Anschlagsfläche des wegschaltbaren Endanschlags einen Bowdenzug (8'), insbesondere mit einem Überhubschutz (8"), aufweist.

9. Fahrzeugsitz nach einem der vorhergehenden Ansprüche, **dadurch gekennzeichnet, dass** der wegschaltbare Endanschlag (6') eine Führung aufweist, welche durch mindestens einen in der ersten Schiene (12) vorgesehenen Schlitz gebildet ist.

10. Fahrzeugsitz nach einem der Ansprüche 1 bis 8, **dadurch gekennzeichnet, dass** der wegschaltbare Endanschlag (6') um eine Schwenkachse schwenkbar an der zweiten Schiene (13) gelagert ist.

11. Fahrzeugsitz nach Anspruch 10, **dadurch gekennzeichnet, dass** die Schwenkachse in Querrichtung verläuft.

12. Fahrzeugsitz nach einem der Ansprüche 10 bis 11, **dadurch gekennzeichnet, dass** die Schwenkachse im in Fahrtrichtung hinteren Bereich des wegschaltbaren Endanschlags (6') angeordnet ist.

13. Fahrzeugsitz nach einem der Ansprüche 10 bis 12, **dadurch gekennzeichnet, dass** im in Fahrtrichtung vorderen Bereich des wegschaltbaren Endanschlags (6') ein Zugelement (16) eingehängt ist.

14. Fahrzeugsitz nach einem der Ansprüche 10 bis 13, **dadurch gekennzeichnet, dass** ein Federelement, insbesondere eine Blattfeder (20), vorgesehen ist, welche den wegschaltbaren Endanschlag (6') in Vertikalrichtung nach unten vorspannt.

15. Fahrzeugsitz nach einem der Ansprüche 10 bis 14, **dadurch gekennzeichnet, dass** der wegschaltbaren Endanschlag (6') mehrteilig ausgebildet ist und ein Metallteil und ein Kunststoffteil umfasst.

## Claims

1. Longitudinally adjustable vehicle seat (1) having at least one rail pair (10) with a first rail (12) connectable to a vehicle structure (11) and a second rail (13) connected to the vehicle seat (1) and led in said first rail (12),
a detachable locking device (6) for detachably locking the position of the first rail (12) with respect to the second rail (13), a first end stop, a second end stop and a third end stop, delimiting the mobility of the rail pair (10),
in which one of the end stops (6') is constructed in a disconnectable manner by means of a stop surface (13") which can move out of the traveling path of the rails (12, 13),
**characterized in that** the movable stop surface (13") is arranged on the seat-mounted second rail (13), and **in that**
the disconnectable end stop (6'), on which the movable stop surface (13") is formed, can be actuated together with the locking device (6) for adopting an easy-entry position.

2. Vehicle seat according to Claim 1, **characterized in that** the disconnectable end stop (6') is a front end stop, which delimits a comfort adjustment range forwards, and this comfort adjustment range can be extended forward through moving away the movable stop surface (13") by actuating an easy-entry function.

3. Vehicle seat according to Claim 1 or 2, **characterized in that** the maximum adjustment range forwards and backwards is limited in each case by a fixed end stop, **characterized in that** the comfort adjustment range is a sub-range of the maximum adjustment range

4. Vehicle seat according to one of the preceding claims, **characterized in that** the disconnectable end stop has said movable stop surface (13"), which is arranged on the seat-mounted second rail (13), and the two other end stops have fixed stop surfaces (13', 13"') on the seat-mounted second rail (13), wherein the movable stop surface (13") of the disconnectable end stop is arranged between the two fixed stop surfaces (13', 13"') of the two other end stops.

5. Vehicle seat according to one of the preceding claims, **characterized in that** the associated stop surfaces (12', 12", 12"') of the end stops are arranged on the first rail (12) in such a way that the stop surface (12") of the disconnectable end stop, which stop surface is associated with the movable stop surface (13"), is arranged at one end of the first rail (12).

6. Vehicle seat according to one of the preceding claims, **characterized in that** the associated stop surfaces (12', 12", 12"') of the end stops are arranged on the first rail (12) in such a way that the stop surface (12'), associated with the fixed stop surface (13'), of the end stop, which delimits the adjustment range backwards, is arranged between the stop surface (12"), associated with the movable stop surface (13"), and the stop surface (12"'), associated with the fixed stop surface (13"'), of the end stop, which delimits forwards the adjustment range.

7. Vehicle seat according to one of the preceding claims, **characterized in that** the locking device (6) can be actuated by means of two separately formed actuation devices, wherein only the locking device (6) is actuated for a pure seat length adjustment, and, for adopting the easy-entry position, both the locking device (6) and also a disconnectable end stop (6'), on which the movable stop surface (13") is formed, are actuated.

8. Vehicle seat according to one of the preceding claims, **characterized in that** the actuation device for the movable stop surface of the disconnectable end stop has a Bowden cable (8'), in particular with an excess travel protection device (8").

9. Vehicle seat according to one of the preceding claims, **characterized in that** the disconnectable end stop (6') has a channel which is formed by means of at least one slot provided in the first rail (12).

10. Vehicle seat according to one of Claims 1 to 8, **characterized in that** the disconnectable end stop (6') is mounted on the second rail (13) in a swiveling manner around a swivel axis.

11. Vehicle seat according to Claim 10, **characterized in that** the swivel axis runs in the transverse direction.

12. Vehicle seat according to either of Claims 10 and 11, **characterized in that** the swivel axis is arranged in the rear section of the disconnectable end stop (6'), in the travel direction.

13. Vehicle seat according to one of Claims 10 to 12, **characterized in that** a tension element (16) is mounted in the front section of the disconnectable end stop (6'), in the travel direction.

14. Vehicle seat according to one of Claims 10 to 13, **characterized in that** a spring element, in particular a leaf spring (20), is provided, which strains the disconnectable end stop (6') downwards in the vertical direction.

15. Vehicle seat according to one of Claims 10 to 14, **characterized in that** the disconnectable end stop (6') is constructed from several parts and comprises a metal part and a plastic part.

## Revendications

1. Siège de conducteur (1) réglable en direction longitudinale, comprenant
au moins une paire de rails (10), avec un premier rail (12) pouvant être assemblé à une structure du véhicule (11), un deuxième rail (13) assemblé au siège de véhicule (1) et guidé dans ce premier rail (12),
un dispositif de verrouillage libérable (6), pour le verrouillage libérable de la position du premier rail (12) par rapport au deuxième rail (13),
une première butée d'extrémité, une deuxième butée d'extrémité et une troisième butée d'extrémité, qui limitent la mobilité de la paire de rails (10),
dans lequel une des butées d'extrémité (6') est réalisée sous forme escamotable au moyen d'une face de butée (13") déplaçable hors du trajet des rails (12, 13),
**caractérisé en ce que** la face de butée déplaçable (13") est disposée sur le deuxième rail (13) fixé au siège, et **en ce que** la butée d'extrémité escamotable (6'), sur laquelle la face de butée (13") est formée, peut être actionnée de concert avec le dispositif de verrouillage (6) pour occuper une position d'entrée aisée.

2. Siège de véhicule selon la revendication 1, **caractérisé en ce que** la butée d'extrémité escamotable (6') est une butée d'extrémité antérieure, qui limite vers l'avant une zone de réglage de confort, et cette zone de réglage de confort peut être étendue vers l'avant par l'actionnement d'une fonction d'entrée aisée en écartant la face de butée déplaçable (13").

3. Siège de véhicule selon la revendication 1 ou 2, **caractérisé en ce que** la zone de réglage maximale vers l'avant et vers l'arrière est limitée respectivement par une butée d'extrémité stationnaire, dans lequel la zone de réglage de confort est une partie de la zone de réglage maximale.

4. Siège de véhicule selon l'une quelconque des revendications précédentes, **caractérisé en ce que** la butée d'extrémité escamotable présente ladite face de butée déplaçable (13"), qui est disposée sur le deuxième rail (13) fixé au siège, et les deux autres butées d'extrémité présentent des faces de butée stationnaires (13', 13"') sur le deuxième rail (13) fixé au siège, dans lequel la face de butée déplaçable (13") de la butée d'extrémité escamotable est disposée entre les deux faces de butée stationnaires (13', 13"') des deux autres butées d'extrémité.

5. Siège de véhicule selon l'une quelconque des revendications précédentes, **caractérisé en ce que** les faces de butée associées (12', 12", 12"') des butées d'extrémité sont disposées sur le premier rail (12), de telle manière que la face de butée (12") de la butée d'extrémité escamotable associée à la face de butée déplaçable (13") soit disposée sur une extrémité de rail du premier rail (12).

6. Siège de véhicule selon l'une quelconque des revendications précédentes, **caractérisé en ce que** les faces de butée associées (12', 12", 12"') des butées d'extrémité sont disposées sur le premier rail (12), de telle manière que la face de butée (12') de la butée d'extrémité limitant la zone de réglage vers l'arrière, associée à la face de butée stationnaire (13'), soit disposée entre la face de butée (12") associée à la face de butée déplaçable (13") et la face de butée (12"') associée à la face de butée stationnaire (13"'), de la butée limitant la zone de réglage vers l'avant.

7. Siège de véhicule selon l'une quelconque des revendications précédentes, **caractérisé en ce que** le dispositif de verrouillage (6) peut être actionné au moyen de deux dispositifs d'actionnement réalisés séparément, dans lequel, pour un réglage du siège purement en longueur, on actionne exclusivement le dispositif de verrouillage (6) et, pour occuper une position d'entrée aisée, on actionne aussi bien le dispositif de verrouillage (6) qu'une butée d'extrémité escamotable (6'), sur laquelle la face de butée déplaçable (13") est formée.

8. Siège de véhicule selon l'une quelconque des revendications précédentes, **caractérisé en ce que** le dispositif d'actionnement pour la face de butée déplaçable de la butée d'extrémité escamotable présente un câble Bowden (8'), en particulier avec une sécurité de dépassement de course (8").

9. Siège de véhicule selon l'une quelconque des revendications précédentes, **caractérisé en ce que** la butée d'extrémité escamotable (6') présente un guidage, qui est formé par au moins une fente prévue dans le premier rail (12).

10. Siège de véhicule selon l'une quelconque des revendications 1 à 8, **caractérisé en ce que** la butée d'extrémité escamotable (6') est montée sur le deuxième rail (13) de façon pivotante autour d'un axe de pivotement.

11. Siège de véhicule selon la revendication 10, **caractérisé en ce que** l'axe de pivotement est orienté en direction transversale.

12. Siège de véhicule selon l'une quelconque des revendications 10 à 11, **caractérisé en ce que** l'axe de pivotement est disposé dans la région arrière, suivant la direction de marche, de la butée d'extrémité escamotable (6').

13. Siège de véhicule selon l'une quelconque des revendications 10 à 12, **caractérisé en ce qu'**un élément de traction (16) est suspendu dans la région avant, suivant la direction de marche, de la butée d'extrémité escamotable (6').

14. Siège de véhicule selon l'une quelconque des revendications 10 à 13, **caractérisé en ce qu'**il est prévu un élément à ressort, en particulier une lame de ressort (20), qui précontraint la butée d'extrémité escamotable (6') en direction verticale vers le bas.

15. Siège de véhicule selon l'une quelconque des revendications 10 à 14, **caractérisé en ce que** la butée d'extrémité escamotable (6') est réalisée en plusieurs pièces et comprend une pièce en métal et une pièce en matière plastique.
